# EUROPEAN PATENT SPECIFICATION

(11) **EP 1 434 499 B1**
(45) Date of publication and mention of the grant of the patent: **27.04.2005**
(21) Application number: 02800615.3
(22) Date of filing: 08.10.2002
(51) Int. Cl.: A23L 1/314, A23L 1/317

(54) **USE OF CMC IN PROCESSED MEAT PRODUCTS**
VERWENDUNG VON CMC IN FLEISCHVERARBEITUNGSPRODUKTEN
UTILISATION DE CMC DANS DES PRODUITS CARNES TRAITES

(30) Priority: 09.10.2001 EP 01203806
(43) Date of publication of application: 07.07.2004
(73) Proprietor: Akzo Nobel N.V., 6824 BM Arnhem (NL)
(72) Inventor: BOEVINK, Frans, H., M., 6932 BW Westervoort (NL)
(74) Representative: Schalkwijk, Pieter Cornelis
(86) International application number: PCT/EP2002/011329
(87) International publication number: WO 2003/030660

(56) References cited:
- EP-A- 0 729 709
- WO-A-99/20657
- US-A- 4 348 420
- US-A- 4 863 754
- US-A- 5 219 599
- US-A- 6 086 929
- LIN K.: "Comparisons of carboxymethyl cellulose with differing molecular features in low-fat frankfurters" JOURNAL OF FOOD SCIENCE, vol. 53, no. 6, 1988, page 1592-1595 XP002189967 cited in the application
- PATENT ABSTRACTS OF JAPAN vol. 012, no. 005 (C-467), 8 January 1988 (1988-01-08) -& JP 62 163674 A (DAICEL CHEM IND LTD), 20 July 1987 (1987-07-20)
- MITTAL G.: "Effects of various cellulose gums on the quality parameters of low-fat breakfast sausages" MEAT SCIENCE, vol. 35, 1993, page 93-103 XP001061374 cited in the application
- BARBUT S.: "Effects of three cellulose gums on the texture profile and sensory properties of low fat frankfurters" INTERNATIONAL JOURNAL OF FOOD SCIENCE & TECHNOLOGY, vol. 31, 1996, pages 241-247, XP008000547
- SHAND P J ET AL: "PROPERTIES OF ALGIN/CALCIUM AND SALT/PHOSPHATE STRUCTURED BEEF ROLLS WITH ADDED GUMS" JOURNAL OF FOOD SCIENCE, INSTITUTE OF FOOD TECHNOLOGISTS. CHICAGO, US, vol. 58, no. 6, 1 November 1993 (1993-11-01), pages 1224-1230, XP000418012 ISSN: 0022-1147 cited in the application
- SIKKEMA D J ET AL: "CARBOXYMETHYLCELLULOSE WITH XANTHAN GUM LIKE RHEOLOGY" MACROMOLECULES, AMERICAN CHEMICAL SOCIETY. EASTON, US, vol. 22, 1989, pages 364-366, XP002116799 ISSN: 0024-9297 cited in the application

## Description

The present invention relates to the use of carboxymethyl cellulose in processed meat products.

Carboxymethyl cellulose (CMC), typically in the form of sodium carboxymethyl cellulose, is a well-known water-soluble polymer which is widely used in food products.

Several prior art documents disclose the use of CMC in processed meat products.

K.C. Lin et al. in J. Food Science, Vol. 53, 1988, 1592-1595, disclose the use of CMCs - typically in amount of 0.25 wt% - with varying degrees of substitution (DS) and molecular weights in low-fat frankfurters. It is concluded that "with the exception of springiness and cohesiveness, addition of the CMC significantly decreased the textural parameters" of the meat products, and that differences in the DS or molecular weight of the CMC did not lead to differences in the texture of the products.

P.J. Shand et al. in J. Food Science, Vol. 58, 1993, 1224-1230, disclose the use of CMC - at levels of 0.5 and 1.0 wt% - in beef rolls and conclude that CMC improved water holding (i.e. cook yield), but had detrimental effects on product texture, notably the bind strength and the hardness of the cooked food products.

G. S. Mittal and S. Barbut in Meat Science, 35, 1993, 93-103, disclose the use of CMC in low-fat pork breakfast sausages. The springiness of the sausages was reduced and high-fat products were less elastic.

In all of these prior art documents one or more of the textural properties of the processed meat products were impaired when CMC was used. As a result, nowadays CMC is hardly used in processed meat products.

When a CMC not in accordance with the present invention was used in preparing processed meat products, we observed fluid (i.e. weight) loss after cooking/curing and 24 h of cold storage, syneresis (i.e. fluid loss after 1, 2 or 5 weeks of cold storage), and a too low consistency of the end products.

Hence, there is a need in the art for a material which can be used advantageously in processed meat products and which does not have the disadvantages mentioned above. Preferably, the material should not adversely affect processed meat product properties such as consistency, juiciness,. texture, and first bite, and should not give rise to fluid loss, syneresis, and jelly formation. Also, the use of this material preferably should reduce the total cost of the processed meat product, i.e. it should be cost-effective. Surprisingly, such a material has now been found.

The present invention relates to the use of a carboxymethyl cellulose (CMC) in processed meat products, wherein the CMC is characterized by forming a gel at 25°C after high-shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500, the gel being a fluid having a storage modulus (G') which exceeds the loss modulus (G") over the entire frequency region of 0.01-10 Hz when measured on an oscillatory rheometer operating at a strain of 0.2.

The definition of a gel can also be given in terms of the loss angle, delta, which can be calculated from the formula: G"/G' = tan delta. The CMC to be used in accordance with the present invention has a delta smaller than 45°.

Apparatus for high-shear dissolution are known to a person of ordinary skill in the art. High-shear dissolution typically is achieved by using a Waring blender or Ultra-Turrax. These apparatus typically operate at approx. 10,000 rpm or more.

The use of a CMC in accordance with the present invention in processed meat products unexpectedly leads *inter alia* to a clearly higher water binding capacity, an improvement in the consistency, juiciness, texture, and/or first bite properties of the processed meat product and does not give rise to fluid loss, syneresis, and/or jelly formation.

We have surprisingly further found that when a CMC as defined in claim 1 was used, the amounts of certain additives such as phosphate, carbonate, citrate, emulsifier, and caseinate - some of which are typically used as cutter aids in preparing processed meat products - can be reduced or the additives can be left out entirely from the processed meat product recipe. This may lead to more simplified manufacturing procedures and to a reduction in manufacturing costs.

In the context of the present application, the abbreviation CMC stands for carboxymethyl cellulose as well as for sodium carboxymethyl cellulose.

In the present application, the term "processed meat products" refers to emulsified meat products, such as salami, liverwurst (i.e. liver sausage), wienerwurst (i.e. Vienna sausage or frankfurter), cured cooked sausages (e.g. bratwurst and *Fleischwurst*), and hot dogs; chopped meat products, such as hamburgers; hams, such as boiled or cooked hams and smoked hams; and fresh meat products, such as fresh meat breakfast sausages and fresh meat hamburgers; and pet food applications, such as canned meat and pate's. Preferred processed meat products are emulsified meat products, chopped meat products, and hams. More preferred processed meat products are emulsified meat products and hams. Most preferred are emulsified meat products.

The meat typically is beef, pork, poultry, such as chicken and turkey, fish, or a mixture thereof. Preferred processed meat products comprise beef, pork or poultry, more preferably beef or pork.

It is known to a person of ordinary skill in the art that for preparing processed meat products several qualities of meat are available. The main difference in. these qualities is the amounts of meat, fat and water (and/or ice) in the processed meat product, varying from lean meat to various types of fat. Typical meat qualities are lean meat, separator meat or mechanically deboned meat, and backfat.

The CMC to be used in accordance with the present invention can be obtained by the processes described by D.J. Sikkema and H. Janssen in Macromolecules, 1989, 22, 364-366, or by the process disclosed in WO 99/20657. The procedures and apparatus to be used are conventional in the art and variations on these known procedures can easily be made by a person skilled in the art using routine experimentation. In particular, we have found that the amount of water which is used in the process is an important parameter for obtaining the CMC in accordance with the present invention. Typically, a 20-40 wt% (final content) aqueous alkali metal hydroxide solution (e.g. aqueous sodium hydroxide solution) is used.

The characterization of CMCs depends mainly on rheology measurements, in particular viscosity measurements. See, e.g., J.G. Westra, Macromolecules, 1989, 22, 367-370. In this reference, the properties of the CMCs obtained via the process disclosed by Sikkema and Janssen in Macromolecules, 1988, 22, 364-366, are analyzed. Important properties of a CMC are its viscosity, thixotropy, and shear-thinning effect. We have found that for the use of CMC in processed meat products, apart from the rheological properties, properties such as the water absorption capacity and the rate of water absorption are important.

The rheology of aqueous CMC solutions is rather complex and depends on a number of parameters including the degree of polymerization (DP) of the cellulose, the degree of substitution (DS) of the carboxymethyl groups, and the uniformity or non-uniformity of substitution, i.e. the distribution of carboxymethyl groups over the cellulose polymer chains.

The degree of polymerization (DP) of the CMC to be used in accordance with the present invention can vary over a broad range. In the context of the present invention, a distinction is made between the following DP ranges, i.e. >4,000, >3,000-4,000, 1,500-3,000, and <1,500. Typically, the CMC is prepared from linters cellulose (DP typically >4,000-7,000), wood cellulose (DP typically 1,500-4,000) or depolymerized wood cellulose (DP typically <1,500). Preferably, the DP of the CMC to be used in accordance with the present invention is at least 1,500, more preferably >3,000, even more preferably >4,000. It is preferred that the CMC is prepared from linters cellulose.

The CMC to be used in accordance with the present invention typically has a DS of at least 0.5, preferably at least 0.6, more preferably at least 0.65, most preferably at least 0.7, and typically at most 1.2, preferably at most 1.1, more preferably at most 0.95, and most preferably at most 0.9.

The Brookfield viscosity (Brookfield LVF, spindle 4, 30 rpm, 25°C) is measured after high-shear dissolution, for example using a Waring blender, of the CMC in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500. Preferably, a CMC having a viscosity of more than 9,000, more preferably of more than 9,500, even more preferably of more than 10,000 mPa.s is used.

Aqueous solutions of the CMC to be used in accordance with the present invention are strongly thixotropic. The thixotropy can be determined by preparing a 1 wt% aqueous CMC solution and measuring the viscosity as a function of the shear rate (i.e. 0.01-300 s⁻¹) on a controlled rate or controlled stress rheometer in rotational mode at 25°C using a cone-plate, parallel-plate or bob-cup geometry. An upcurve is recorded in which the shear rate is increased from 0.01 to 300 s⁻¹, immediately followed by the recording of a downcurve in which the shear rate is decreased over the same range. For a CMC in accordance with the present invention, the upcurve will be at a higher viscosity level than the downcurve and the area between the two curves is a measure for thixotropy, also referred to as the thixotropy area. Typically, one speaks of a thixotropic solution when the area has a value of 5 Pa.s.s⁻¹ or more when measured at 2 to 4 hours after preparation of the aqueous solution.

There is no standard test for measuring the water absorption capacity and the rate of water absorption of CMCs. In this specification, the water absorption capacity is determined using the "teabag test," which test is described in the Examples. The rate of water absorption is determined by calculating the water absorption at increasing time intervals.

The CMC to be used in accordance with the present invention typically has a water absorption capacity in the range of >300-600 for a CMC having a DP of >4,000, >200-300 for a CMC having a DP of >3,000-4,000, >100-200 for a CMC having a DP of 1,500-3,000, and 50-100 g water/g CMC for a CMC having a DP of <1,500.

As mentioned above, preferred processed meat products are emulsified meat products, chopped meat products, and hams. A typical emulsified meat product (e.g. frankfurters, wieners, liverwurst) is formed by conventionally mixing in a cutter meat, fat, fragmented ice/water, salt (i.e. common salt) or salt with nitrite (in German, NPS, *Nitrit Pökel Salz*), additives (e.g. caseinate, citrate, carbonate, and phosphate or a mixture thereof), spices/seasoning, a re-colouring agent (e.g. ascorbic acid or ascorbate), and a CMC as defined in claim 1.

In the art, use is made of different cutter procedures, i.e. starting with the addition of meat, the all-in procedure, and the use of a cutter in combination with a colloid mill. A typical cutter procedure is described in Example 1 below. These procedures and apparatus are well-known to the person skilled in the art. The CMC to be used in accordance with the present invention can be used in all of these procedures and at any point of the procedure, but we have found that it is preferable to add the CMC after adding the salt, either in the form of common salt or as salt with nitrite.

In preparing processed meat products, we have found that when a CMC in accordance with the present invention is used, the use of cutter aids, in particular of phosphate or a mixture of additives comprising phosphate, can be reduced significantly or is even no longer required.
We have further found that when a CMC in accordance with the present invention is used, lesser quality meat, i.e. meat containing a lower content of lean meat and optionally a higher water content, can be used. Such CMC-containing lesser quality meat generally has a similar consistency and texture as compared to meat having a relatively high amount of lean meat.

In preparing liverwurst, the fat/water/liver emulsion typically is heated/cooked during the cutter procedure. We have found that when a CMC in accordance with the present invention is used, this additional heating is not necessary any longer, which results in a more economical procedure.

Chopped meat products (e.g. hamburgers) are prepared by finely grinding meat in a meat mincer, adding spices, salt, and water, and forming the meat product to a desired shape using a mould. The pre-formed product is then typically cured in an oven and subsequently prefried in hot oil. The CMC in accordance with the present invention is added to the ground meat as a dry powder, preferably as a mixture with the spices.

In the processed meat products industry, two different procedures are used for preparing boiled and smoked hams, i.e. the injection of whole meat parts or coarse meat chunks followed by a tumbling process and a tumbling process of coarse meat chunks followed by pressing into natural or artificial casings.

A typical procedure for preparing pressed hams is the following. A brine dispersion is prepared from ice/water, a pre-calculated salt concentration (normal salt or salt with nitrite), injection and tumbling aid ingredients and liquid or solid phosphate. Subsequently a CMC in accordance with the present invention is added. Depending upon the technology used the meat is placed, when a combined injection/tumbler technique is used, under the injector. The meat will then be injected with the brine dispersion and accordingly be transferred into a vacuum tumbler accompanied with the rest of the non-absorbed brine-dispersion. When only the tumbler technique (often when smaller meat chunks are being used) is used the meat is put into the tumbler and the aforementioned brine dispersion is added on top of the meat. In both techniques the mixture of meat and the brine dispersion are tumbled for at least 2.5 hrs at 10 rpm at a temperature of 3 to 5 ⁰C. Approximate after 1 hr of tumbling the procedure is stopped and the additional salt content is added as a dry powder. After the tumbling period is completed the whole meat parts are e.g. packed in special cellophane casings and the smaller meat chunks are often stuffed in natural or artificial casing. The produced hams are then transferred into a cooking chamber until a kernel/core temperature is reached of 68 ⁰C. Accordingly the hams are cooled down by spraying with water and stored in a cold storage room for at least 18 hrs.

We have found that it was advantageous - in particular with respect to the surface appearance and sliceability of hams - to use a CMC in accordance with the present invention in combination with another hydrocolloid having gelling or binding properties, such as carrageenan, collageneous protein, and konjac. To reduce the cooking losses even more, some 1 to 2% of native starch can be added, preferably just before the end of the tumbling procedure.

The amount of CMC to be used in accordance with the present invention varies and is dependent on the amount and the type of meat, fat, and water used for preparing the processed meat product. Typically, an amount of 0.05 to 1.0 wt%, preferably 0.05 to 0.5 wt%, more preferably 0.05 to 0.4 wt%, most preferably 0.05 to 0.3 wt% is used, based on the total weight of the processed meat product. In general, we have found that compared to a CMC not in accordance with the present invention, less of a CMC in accordance with the present invention is required for preparing processed meat products. The optimal amount of CMC to be used in accordance with the present invention can be determined by a person skilled in the art by routine experimentation using the above amounts and the Examples given below as guidance.

The CMC to be used in accordance with the present invention typically is added as a dry powder during any of the above-described procedures for preparing a processed meat product, for example, in the form of a dry mixture with one or more of the other ingredients of the processed meat product. Preferably, the CMC is added as a dry mixture with the spices.

The present invention is illustrated by the following Examples.

### EXAMPLES

### Materials:

Akucell AF 2985, Akucell AF 3085, and Akucell AF 3185 (all ex Akzo Nobel) are CMCs which are not in accordance with the present invention.

CMC-1, CMC-2, and CMC-3 are CMCs which are in accordance with the present invention, i.e. they form a gel at 25°C when dissolved in an amount of 0.3 wt% aqueous sodium chloride solution under high shear.

CMC-1: Prepared from linters cellulose. DP of 6,500. DS of 0.75. A 1 wt% aqueous solution of this product has a Brookfield viscosity (LVF, spindle 4, 30 rpm, 25°C) of 13,000 mPa.s using a Heidolph mixer at 2,000 rpm and of 20,000 mPa.s using a Waring blender at 10,000 rpm (i.e. high shear). CMC-1 has a strong pseudoplastic rheology and a tendency to thicken up in time, that is, it has a thixotropic rheology. A thixotropy area of 220 Pa.s.s⁻¹ was calculated using the method described hereinbelow. CMC-1 does not dissolve in a salt or acid solution under normal mixing conditions (i.e. propeller blade mixer at 2,000 rpm). At high shear (i.e. Waring blender at over 10,000 rpm), CMC-1 does dissolve and the viscosity builds up rapidly without lump formation. CMC-1 has a water absorption capacity, as determined with the teabag test described below, of 400 g water/g CMC. CMC-1 also rapidly absorbs the water.

CMC-2: Prepared from linters cellulose. DP of 6,500. DS of 0.85. A 1 wt% aqueous solution of this product has a Brookfield viscosity of 8,500 mPa.s using a Heidolph mixer at 2,000 rpm and of 8,000 mPa.s using a Waring blender at 10,000 rpm (i.e. high shear). CMC-2 has a pseudoplastic rheology and a tendency to thicken up in time, that is, it has a thixotropic rheology. A thixotropy area of 40 Pa.s.s⁻¹ was calculated using the method described hereinbelow. CMC-2 has a water absorption capacity, as determined with the teabag test, of 300 g water/g CMC. CMC-2 also rapidly absorbs the water.

CMC-3: Prepared from linters cellulose DP of 6,500 dS of 0.75. A 1 wt%. aqueous solution of this product has a Brookfield over 12,000 mPa.s using a Heidolph Mixer at 2000 rpm and well over 20,000 mPa.s using a Waring Blender at 10,000 rpm. (i.e. high shear). CMC-3 has a pseudoplastic rheology and a tendency to thicken up in time, that is, it has a strong thixotropic rheology. A thixotropic area of more than 250 Pa.s.s⁻¹ was calculated using the method described below. CMC-3 has a water absorption capacity, as determined with the teabag test of approximately 500 g/g CMC. CMC-3 also rapidly absorbs the water. CMC-3 doesn't dissolve in a salt or acid solution under normal mixing conditions (i.e. propellor blade mixer at 2000 rpm). At high shear (i.e. Waring Blender at over 10,000 rpm) CMC-3 does only dissolve when low wt% of salt and/or acid are used without lump formation.

### Rheology

CMC (final content 1 wt%) was dissolved under high shear in a 0.3 wt% aqueous sodium chloride solution using a Waring blender. After dissolution, the fluid or gel was brought to 25°C. The storage modulus (G') and the loss modulus (G") of the fluid were measured as a function of the oscillation frequency (i.e. 0.01-10 Hz) on a TA Instruments AR 1000 controlled stress rheometer operating at a strain of 0.2 (i.e. 20%) in oscillation mode using a 4°-cone-plate geometry at a temperature of 25°C.

### Viscosity

The viscosity of a 1 wt% aqueous solution of CMC was measured using a Brookfield LVF viscometer, spindle 4, 30 rpm, 25°C.

### Thixotropy

For determining the thixotropy, a 1 wt% aqueous CMC solution was prepared and the viscosity was measured as a function of the shear rate (i.e. 0.01-300 s⁻¹) on a controlled stress rheometer in rotational mode at 25°C using a cone-plate. An upcurve was recorded in which the shear rate was increased from 0.01 to 300 s⁻¹, immediately followed by the recording of a downcurve in which the shear rate was decreased over the same range. The measurement was carried out at 2 to 4 hours after preparation of the aqueous solution.

### Teabag test

An amount of 50 mg of CMC was weighed into a sealable teabag of approx. 7.5 x 7.5 cm. After being sealed, the teabag was soaked in a container with water and weighed at intervals until complete saturation. The number of grams of water per gram of CMC was then calculated.

### Consistency

The consistency - expressed in grams - was measured with a Stevens TFRA Texture Analyzer using a cylindrical probe (diameter ½", length 35 mm), penetration distance 2-4 mm, speed 1 mm/s. The temperature of the sample material (thickness 40 mm, diameter 120 mm) was 8-10°C. The minimal number of measurements was 10.

### Other properties of the processed meat product

Fluid loss and syneresis (i.e. fluid loss after 1, 2 or 5 weeks of cold storage) were determined by calculating the weight loss of the processed meat product. Other properties of the processed meat product, such as cold meat emulsion stability, texture, sliceability, surface appearance, jelly formation at the outer end, visual fat formation, peelability of the casing, taste, colour, juiciness, and (first) bite, were evaluated in a conventional way by means of visual or sensory inspection.

### Example 1

In this Example, two types of CMC, i.e. Akucell AF 3185 and CMC-1, were used in amounts of 0.05 and 0.1 wt% to prepare two types of sausages, i.e. bratwurst and *Fleischwurst*. A typical cold meat emulsion consists of 43.9 wt% of lean pork, 28.3 wt% of backfat, 24.70 and 24.65 wt%, respectively, of fragmented ice, 2.0 wt% of salt with nitrite, 1.0 wt% of spices, and 0.05 wt% of phosphate, based on the total weight of the emulsion. As a comparison, a blank was prepared by only adding the phosphate.

The sausages were prepared in a conventional way by preparing a cold meat emulsion in a cutter, stuffing the emulsion in an artificial or natural casing using an extruder, transporting the sausage to a smoking and/or steam chamber (i.e. for cooking/curing at a temperature of 76-78°C to a core temperature of 68-70°C), and storing in a cool room.
For bratwurst, the cold meat emulsion was extruded into a natural casing and the sausage was cooked/cured in a steam chamber. For *Fleischwurst,* the emulsion was extruded in an artificial casing and the sausage was first smoked in a smoking chamber and then cooked/cured in a steam chamber.

We observed that after 24 h of cold storage, the sliceability, surface appearance, jelly formation at the outer end, and peelability were the same as for the blank, but that surprisingly the consistency had improved.
For example, in a *Fleischwurst* where the CMC was added in an amount of 0.1 wt% with 25 wt% of fragmented ice, compared to the blank, the consistency increased from 545 to 785 for AF 3185 and from 545 to 923 for CMC-1.

### Bratwurst

The CMC was added in an amount of 0.1 wt% with 30 wt% of fragmented ice.
The amounts of lean pork and backfat were reduced accordingly.
Compared to the blank, the fluid loss after cooking/curing decreased from 4.7% to 3.2% for AF 3185 and from 4.7% to 3.5% for CMC-1.
Compared to the blank, the fluid loss after cooking/curing and cold storage for 24 h decreased from 9.4% to 7.5% for AF 3185 and from 9.4% to 7.3% for CMC-1.

### Bratwurst (vacuum packed)

The CMC was added in an amount of 0.1 wt% with 30 wt% of fragmented ice.
The amounts of lean pork and backfat were reduced accordingly.
Compared to the blank, the fluid loss after 2 weeks of cold storage decreased from 5.1 % to 3.0% for AF 3185 and from 5.1 % to 3.3% for CMC-1.
Compared to the blank, the fluid loss after 5 weeks of cold storage decreased from 6.4% to 3.4% for AF 3185 and from 6.4% to 4.3% for CMC-1.

### Fleischwurst (vacuum packed in slices)

The CMC was added in an amount of 0.1 wt% with 30 wt% of fragmented ice. The amounts of lean pork and backfat were reduced accordingly.
Compared to the blank, the fluid loss after 2 weeks of cold storage decreased from 10.3% to 8.0% for AF 3185 and from 10.3% to 8.9% for CMC-1.
Compared to the blank, the fluid loss after 5 weeks of cold storage decreased from 10.7% to 8.5% for AF 3185 and from 10.7% to 9.0% for CMC-1.

The addition of these CMCs to these meat products in the small amount of 0.1 wt% resulted in an improvement of the cold meat emulsion stability, a reduction in fluid loss during cooking/curing and 24 h cold storage, a reduction in fluid loss during 2 and 5 weeks cold storage (i.e. syneresis), and an increase in the consistency of the meat products, without impairing the textural properties, taste, colour or bite of the products. It should be noted that a relatively high amount of added water (i.e. 30 wt%) was used.

### Example 2

In this example, CMC-2 was used in amount of 0.2 wt% to prepare a bratwurst type of sausage the typical cold emulsion consists of 38.3 wt% of pork meat. The typical cold emulsion consists of 38.3 wt% of lean pork, 40.0 wt% ice/water, 18.5 wt% of backfat, 2.0% of salt with nitrite and 1.0 wt% of spices. As a comparison, a blank was prepared using 0.3% of phosphate without CMC. The sausages were prepared in a conventional way by preparing a cold meat emulsion in a cutter, stuffing the emulsion in natural casing using an extruder, transporting the sausage to a smoking and/or steam chamber (i.e. for cooking/curing at a temperature of 76-78 °C to a core temperature of 68 - 70 °C), and storing in cold room. The CMC-2 was added just after addition of the salt with nitrite addition. Compared to the blank, the fluid loss after 2 weeks and 5 weeks of cold storage decreased from 9.7 to 6.4 wt% after 2 weeks resp. from 11.8 to 7.5 wt% after 5 weeks for the CMC-2. The addition of CMC-2 to this meat emulsion of 0.2 wt% resulted in an improvement of the cold emulsion stability, a reduction in the fluid loss (i.e. syneresis). Also an increase in the consistency of the meat products, which resulted in clear better first bite, this without impairing the textural properties, taste and color of the product. It should be noted that a relatively high amount of added water was used in this recipe.

### Example 3

In this Example, *Fleischwurst* were prepared from 48.8 wt% of lean pork meat, 24.4 and 24.425 wt%, respectively, of ice/water, 24.4 wt% of fat, 0.5 wt% of. spices, 1.8 wt% of salt with nitrite, and either 0.15 wt% or 0.075 wt% of CMC-2. As a comparison, sausages with either 0.3 wt% of phosphate - which is conventional in cooked sausages - or 0.15 wt% of AF 3185 were prepared.

The sausages were prepared according to the procedure described in Example 1. Natural casings were used for these sausages.

The consistency of the sausages with 0.15 wt% and 0.075 wt% CMC-2 was found to be 756 and 523, respectively. With 0.3 wt% phosphate it was 517, and with 0.15 wt% AF 3185 it was 451.

Hence, a much smaller amount (i.e. 0.075 wt%) of CMC-2 - a CMC in accordance with the present invention - can replace 0.3 wt% of phosphate without negatively influencing the consistency, texture, sliceability, peelability, taste, syneresis, and first bite of the cooked sausage. When a somewhat larger amount (i.e. 0.15 wt%) - but still smaller than 0.3 wt% phosphate - of CMC-2 was used, the consistency of the cooked sausage improved considerably as compared to when an equal amount of AF 3185 was used.

### Example 4

In this Example, Vienna sausages were prepared from 48 wt% of lean pork meat, 0.1 wt% of ascorbic acid, 21.6 wt% of ice/water, 26.5 wt% of fat and cheek, 0.5 wt% of spices, 1.7 wt% of salt with nitrite, and either 0.15 or 0.1 wt% CMC-2. As a comparison, CMC-2 was replaced with a conventional mixture consisting of 0.3 wt% phosphate, 0.3 wt% citrate, and 1.0 wt% caseinate.

The sausages were prepared according to the procedure described in Example 1. Artificial casings were used for the Vienna sausages.

The consistency of the sausage with 0.15 wt% and 0.1 wt% CMC-2 was found to be 782 and 750, respectively. The cooking loss (i.e. fluid/weight loss after cooking) was 10.9 and 11.9%, respectively. For the comparison, containing a mixture of phosphate, citrate, and caseinate, the consistency was 764, and the cooking loss was 12.5%.

Again, a smaller amount (i.e. 0.1 wt%) of CMC-2 can replace the mixture of phosphate, citrate, and caseinate (i.e. 1.6 wt% in total) - which is normally used in preparing Vienna sausages - without negatively influencing the texture, sliceability, peelability, taste, syneresis, and first bite of the Vienna sausage. Also, a better consistency and lower cooking loss can be obtained when using CMC-2 (in an amount of 0.15 wt%) as compared to the mixture of phosphate, citrate, and caseinate (in an amount of 1.6 wt%).

### Example 5

In this Example, hamburgers were prepared from 93.3 wt% chopped pork meat, 2.05 wt% spices and salt, 4.575, 4.55, and 4.60 wt%, respectively, of water, and 0.075 wt%, 0.1 wt% or 0.15 wt% of CMC-2. For comparison, a blank without a CMC and a hamburger with the amount of CMC-2 replaced with 0.1 wt% of AF 3185 were prepared.

The hamburgers were prepared according to the following procedure. All ingredients were mixed with a kitchen aid for 1 min and then preformed in moulds (slices of approx. 150 g). The preformed meat products were cured in a steam oven for 8 min and were prefried (i.e. deep-fried) in hot oil for 1 min.

The fluid loss after 8 min of curing was 12.3%, 10.2%, and 10.3%, respectively. The fluid loss after 1 min of frying was 23.3%, 23.3%, and 19.1%, respectively. The fluid loss after 24 h of cold storage was 24.6%, 24.2%, and 21.8%, respectively. The product impressions were: more juicy than the blank, good bite and juiciness, and excellent bite and excellent juiciness, respectively.
The fluid loss after 8 min of curing was 10.4% for the blank and 10.6% for AF 3185. The fluid loss after 1 min of frying was 27.8% for the blank and 29.6% for AF 3185. The fluid loss after 24 h of cold storage was 29.4% for the blank and 31.2% for AF 3185. The product impression for the blank was dry and tough, for AF 3185 it was slightly more juicy than the blank.

The conclusion on the basis of these results is that the use of CMC-2 results in much less fluid loss, in particular after 1 min of frying and after 24 h of cold storage, and in improved bite and juiciness as compared to the blank and when AF 3185 is used.

### Example 6

In this example, hams were prepared, according the tumbling procedure, from 55.5 wt% of lean pork parts (approx. 3x5 cm), 40.65 wt% of ice/water (1:10), 2.4 % salt (in total) with nitrite, 0.33 wt% of injection and tumbling aid ingredients 0.15 wt% phosphate and 0.20 wt% of CMC-1. As a comparison, a ham with 0.4-wt% (semi-purified) kappa-carrageenan was prepared. The hams were prepared according the following procedure. A dispersion was prepared from the ice/water, phosphate, injection and tumbling aid ingredients, a pre-calculated part of the salt with nitrite. After pre-dispersing these components, the CMC-1 was added to the dispersion. The pork meat parts were put into the tumbler together the dispersion and tumbled for 1 hr under 90% vacuum at 10 rpm at a temperature of 3-5 ⁰C. After this time-interval the rest of the salt was added and the tumbling was continued for another 2.5 hrs at 10 rpm at a temperature of 3-5 ⁰C. After the tumbling process was completed the product was extruded into a moisture tight sterile casing. The hams were transferred into a cooking chamber until a core temperature is reached of 68 ⁰C. Then, the hams were cooled down with water and stored in a cold storage room for at least 18 hrs.

The boiling loss of CMC-1 was 0 % and that for the ham with the (semi-purified)-kappa-carrageenan system was higher in comparison to the (semi-purified) kappa-carrageenan. It was further found that when the 0.20 wt% was used with 0.05 wt% of (semi-purified) kappa-carrageenan the slice-ability was improved until an optimal level.

### Example 7

In this example, the hams were prepared, by using a combined technique of injection and tumbling, from 71.4 wt% of lean pork parts (appr. 10x20 cm), 25.6 wt% of ice/water (1:10), 2.14 wt% salt (in total) with nitrite, 0.43 wt% of injection and tumbling aid ingredients, 0.15wt% of phosphate and 0.2 wt% CMC-3. The hams were produced according the following procedure. The dispersion was prepared according the under Example 6 described method. After preparation of the dispersion it was transferred into a storage tank, which is directly connected to the injector. The coarse meat chunks were placed on the injector belt. The major amount of the needed dispersion was injected directly into the meat parts. After this injection phase, the meat was transferred into the tumbler, the non-absorbed amount of brine dispersion was added to the tumbler and tumbled for 1 hr under 90% vacuum at 10 rpm at a temperature of 3-5 ⁰C. After this time-interval the rest of the salt was added and the tumbling was continued, under 90% vacuum for another 5 hrs at 10 rpm at a temperature of 3-5 ⁰C. After the tumbling process was completed the product was extruded into a moisture tight sterile casing. The hams were transferred into a cooking chamber until a core temperature is reached of 68 ⁰C. Then, the hams were cooled down with water and stored in a cold storage room for at least 18 hrs. The boiling loss was 0%.

## Claims

1. Use of a carboxymethyl cellulose (CMC) in processed meat products, wherein the CMC is **characterized by** forming a gel at 25°C after high shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of 3,000-4,000, 2 wt% for a CMC having a DP of 1,500-<3,000, and 4 wt% for a CMC having a DP of <1,500, the gel being a fluid having a storage modulus (G') which exceeds the loss modulus (G") over the entire frequency region of 0.01-10 Hz when measured on an oscillatory rheometer operating at a strain of 0.2.

2. Use according to claim 1, **characterized in that** the CMC has a Brookfield viscosity of more than 9,000 mPa.s after high shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500.

3. Use according to claim 1 or 2, **characterized in that** the CMC has a DP of 1,500 or more.

4. Use according to claim 3, **characterized in that** the CMC is prepared from linters cellulose.

5. Use according to any one of claims 1-4, **characterized in that** the CMC has a DS of 0.5 to 1.2.

6. Use according to any one of claims 1-5, **characterized in that** the processed meat product is an emulsified meat product, chopped meat product, pet food or ham.

7. Use according to claim 6, **characterized in that** the processed meat product is an emulsified meat product.

8. Use according to any one of claims 1-7, **characterized in that** the processed meat product comprises beef, pork, fish or poultry.

9. Use according to any one of claims 1-5, **characterized in that** the CMC is used in combination with carrageenan, collageneous protein, konjac, or starch.

10. Use according to any one of claims 1-9, **characterized in that** the CMC is used in an amount of 0.05 to 0.5 wt%, based on the total weight of the processed meat product.

## Patentansprüche

1. Verwendung einer Carboxymethylcellulose (CMC) in verarbeiteten Fleischprodukten, wobei die CMC **dadurch gekennzeichnet ist, dass** sie bei 25°C nach einer hochscherenden Auflösung in einer 0,3-Gew.-%igen wässrigen Natriumchloridlösung ein Gel bildet, wobei der endgültige Gehalt der CMC in der wässrigen Natriumchloridlösung 1 Gew.-% für eine CMC mit einem Polymerisationsgrad (DP) von > 4000, 1,5 Gew.-% für eine CMC mit einem DP von 3000 bis 4000, 2 Gew.-% für eine CMC mit einem DP von 1500 bis < 3000 und 4 Gew.-% für eine CMC mit einem DP von < 1500 beträgt, wobei das Gel eine Flüssigkeit mit einem Speichermodul (G') ist, der über den gesamten Frequenzbereich von 0,01 bis 10 Hz den Verlustmodul (G") überschreitet, wenn man mit einem Oszillationsrheometer misst, das bei einer Dehnung von 0,2 betrieben wird.

2. Verwendung gemäß Anspruch 1, **dadurch gekennzeichnet, dass** die CMC eine Brookfield-Viskosität von mehr als 9000 mPa·s nach einer hochscherenden Auflösung in einer 0,3-Gew.-%igen wässrigen Natriumchloridlösung hat, wobei der endgültige Gehalt der CMC in der wässrigen Natriumchloridlösung 1 Gew.-% für eine CMC mit einem Polymerisationsgrad (DP) von > 4000, 1,5 Gew.-% für eine CMC mit einem DP von > 3000 bis 4000, 2 Gew.-% für eine CMC mit einem DP von 1500 bis 3000 und 4 Gew.-% für eine CMC mit einem DP von < 1500 beträgt.

3. Verwendung gemäß Anspruch 1 oder 2, **dadurch gekennzeichnet, dass** die CMC ein DP von 1500 oder mehr hat.

4. Verwendung gemäß Anspruch 3, **dadurch gekennzeichnet, dass** die CMC aus Linters-Cellulose hergestellt ist.

5. Verwendung gemäß einem der Ansprüche 1 bis 4, **dadurch gekennzeichnet, dass** die CMC ein DS von 0,5 bis 1,2 hat.

6. Verwendung gemäß einem der Ansprüche 1 bis 5, **dadurch gekennzeichnet, dass** es sich bei dem verarbeiteten Fleischprodukt um ein emulgiertes Fleischprodukt, Hackfleischprodukt, Haustierfutter oder Schinken handelt.

7. Verwendung gemäß Anspruch 6, **dadurch gekennzeichnet, dass** es sich bei dem verarbeiteten Fleischprodukt um ein emulgiertes Fleischprodukt handelt.

8. Verwendung gemäß einem der Ansprüche 1 bis 7, **dadurch gekennzeichnet, dass** das verarbeitete Fleischprodukt Rind, Schwein, Fisch oder Geflügel umfasst.

9. Verwendung gemäß einem der Ansprüche 1 bis 5, **dadurch gekennzeichnet, dass** die CMC in Kombination mit Carrageen, kollagenartigem Protein, Konjac oder Stärke verwendet wird.

10. Verwendung gemäß einem der Ansprüche 1 bis 9, **dadurch gekennzeichnet, dass** die CMC in einer Menge von 0,05 bis 0,5 Gew.-%, bezogen auf das Gesamtgewicht des verarbeiteten Fleischprodukts, verwendet wird.

## Revendications

1. Utilisation de carboxyméthylcellulose (CMC) dans des produits carnés transformés, dans laquelle la CMC est **caractérisée en ce qu'**elle forme un gel à 25°C après une dissolution à cisaillement élevé dans une solution aqueuse de chlorure de sodium à 0,3 % en poids, la teneur finale en CMC dans la solution aqueuse de chlorure de sodium étant de 1 % en poids pour une CMC ayant un degré de polymérisation (DP) supérieur à 4000, de 1,5 % en poids pour une CMC ayant un DP de 3000 à 4000, de 2 % en poids pour une CMC ayant un DP de 1500 à moins de 3000 et de 4 % en poids pour une CMC ayant un DP inférieur à 1500, le gel étant un fluide ayant un module de conservation (G') qui est supérieur au module de pertes (G") sur la totalité de la plage de fréquences comprise entre 0,01 et 10 Hz lorsqu'il est mesuré avec un rhéomètre oscillatoire fonctionnant à une déformation de 0,2.

2. Utilisation selon la revendication 1, **caractérisée en ce que** la CMC a une viscosité Brookfield supérieure à 9000 mPa.s après une dissolution à cisaillement élevé dans une solution aqueuse de chlorure de sodium à 0,3 % en poids, la teneur finale en CMC dans la solution aqueuse de chlorure de sodium étant de 1 % en poids pour une CMC ayant un degré de polymérisation (DP) supérieur à 4000, de 1,5 % en poids pour une CMC ayant un DP de plus de 3000 à 4000, de 2 % en poids pour une CMC ayant un DP de 1500 à 3000, et de 4 % en poids pour une CMC ayant un DP inférieur à 1500.

3. Utilisation selon la revendication 1 ou 2, **caractérisée en ce que** la CMC a un DP de 1500 ou plus.

4. Utilisation selon la revendication 3, **caractérisée en ce que** la CMC est préparée à partir de cellulose de linters.

5. Utilisation selon l'une quelconque des revendications 1 à 4, **caractérisée en ce que** la CMC a un DS de 0,5 à 1,2.

6. Utilisation selon l'une quelconque des revendications 1 à 5, **caractérisée en ce que** le produit carné transformé est un produit carné émulsifié, un produit carné haché, un aliment pour animaux domestiques ou du jambon.

7. Utilisation selon la revendication 6, **caractérisée en ce que** le produit carné transformé est un produit carné émulsifié.

8. Utilisation selon l'une quelconque des revendications 1 à 7, **caractérisée en ce que** le produit carné transformé comprend du boeuf, du porc, du poisson ou de la volaille.

9. Utilisation selon l'une quelconque des revendications 1 à 5, **caractérisée en ce que** la CMC est utilisée en combinaison avec de la carragénine, une protéine collagène, du konjac ou de l'amidon.

10. Utilisation selon l'une quelconque des revendications 1 à 9, **caractérisée en ce que** la CMC est utilisée en une quantité de 0,05 à 0,5 % en poids, par rapport au poids total du produit carné transformé.
